# FASCICULE DE BREVET EUROPEEN

(11) **EP 4 198 361 B1**
(45) Date de publication et mention de la délivrance du brevet: **28.05.2025**
(21) Numéro de dépôt: 22211243.5
(22) Date de dépôt: 02.12.2022
(51) Int. Cl.: F16K 99/00

(54) **COMPOSANT FLUIDIQUE ET DISPOSITIF DE TYPE VANNE FLUIDIQUE POUR ISOLATION**
FLUIDISCHES BAUTEIL UND FLUIDVENTILVORRICHTUNG ZUR ISOLIERUNG
FLUID COMPONENT AND FLUID VALVE DEVICE FOR INSULATION

(30) Priorité: 17.12.2021 FR 2113755
(43) Date de publication de la demande: 21.06.2023
(73) Titulaire: Commissariat à l'Energie Atomique et aux Energies Alternatives, 75015 Paris (FR)
(72) Inventeur: BLAIRE, Guillaume, 38054 Grenoble cedex 09 (FR); ALESSIO, Manuel, 38054 GRENOBLE cedex 09 (FR); BAQUE, Mélissa, 38054 Grenoble cedex 09 (FR); ROUX, Jean-Maxime, 38054 Grenoble cedex 09 (FR)
(74) Mandataire: INNOV-GROUP

(56) Documents cités:
- EP-B1- 1 048 855
- US-A- 4 824 073
- US-A1- 2010 252 124
- US-A1- 2012 273 077
- US-A1- 2012 275 929

## Description

### Domaine technique de l'invention

La présente invention se rapporte à un composant fluidique et à un dispositif de type vanne fluidique. Le dispositif peut notamment comporter une chambre de réaction pouvant être isolée par un mécanisme de vanne fluidique. L'invention concerne également un procédé d'analyse mis en œuvre dans ledit dispositif.

### Etat de la technique

Il est connu des documents US2012/064597A1**,** US2013/130262A1**,** US2007/166199A1 **et** US2006/076068A1 des dispositifs micro-fluidiques formés d'un réseau micro-fluidique de capsules micro-fluidiques et de canaux reliant les capsules entre elles. Chaque capsule micro-fluidique comporte une chambre dans laquelle débouche un canal d'entrée et dont ressort un canal de sortie. Une membrane déformable est commandée entre deux positions pour conférer deux états distincts à la capsule, un premier état dans lequel le canal d'entrée communique avec le canal de sortie via la chambre autorisant un transfert de fluide, et un deuxième état dans lequel la membrane bloque la communication entre les deux canaux, empêchant l'écoulement de fluide et le remplissage de la chambre de la capsule. La commande de la membrane entre ses deux états est réalisée à l'aide de moyens pneumatiques, par exemple en exerçant sur elle une pression positive ou une pression négative.

Pour réaliser ces dispositifs, les solutions connues sont réalisées par un assemblage multicouche dans lequel la membrane déformable forme une couche intermédiaire prise entre deux substrats. La membrane est souvent collée, pincée entre deux couches ou fixée par de l'adhésif double-face prédécoupé. Dans ces documents, les capsules microfluidiques sont intégrées dans des cartes ou cartouches microfluidiques qui possèdent des connecteurs pneumatiques de façon à être connectés à des sources et régulateurs de pression externes. Un inconvénient de ces solutions est d'avoir à assurer une connexion sans fuite d'air ou de fluide entre la carte microfluidique intégrant les capsules et les sources de pression. Un autre inconvénient est le bruit produit par les pompes ou compresseurs généralement employés comme sources de pression.

Une alternative aux pompes et compresseurs est le recours à une cartouche de gaz mais la pression produite doit être régulée et, de plus, l'emploi de telles sources de pression peut être soumis à des réglementations telles que par exemple lors d'un transport par avion.

La demande de brevet EP3326717A1 propose une autre solution dans laquelle la vanne est créée par l'ajout dans une cavité d'un liquide destiné à former un élément en matériau déformable. Le mécanisme d'actionnement de l'invention est commandé par une unité de commande et de traitement pour déformer l'élément en matériau déformable de chaque capsule, par exemple en exerçant une pression ou une impulsion de pression au moyen d'un fluide de pression, et en particulier d'un gaz de pression via les trous d'actionnement de chaque capsule. L'unité de commande et de traitement est gérée par une pluralité de modules logiciels, chaque module logiciel correspondant à une ou plusieurs des étapes du procédé. Dans cette invention la source de pression n'est pas décrite mais la commande par une pluralité de modules s'avère complexe.

Ces différentes solutions de vannes sont à actionnement pneumatique et nécessitent des moyens externes complexes pour être actionnées. Ces moyens comportent généralement des pompes ou des compresseurs externes comme sources de pression, des régulateurs de pression et parfois aussi des électrovannes. Ces moyens sont externes aux dispositifs microfluidiques si bien que des connexions pneumatiques étanches doivent être assurées. En outre ces moyens doivent être commandés et régulés par des mécanismes dédiés ou encore pilotés par des circuits électroniques et éventuellement des logiciels.

Il peut être avantageux de disposer d'un mécanisme de vanne dont l'actionnement est simple et fiable, sans recourir à des moyens complexes qui doivent être pilotés ou régulés.

Une solution intéressante pour embarquer une source de pression dans le composant fluidique a été décrite au moyen de composés chimiques dans la publication référencée *"*Charlotte Parent, Nicolas Verplanck, Jean-Luc Achard, Yves Fouillet. Validation and integration of an effervescent reaction for fluid actuation in a microfluidic device. MicroTAS 2016 Conference, Oct 2016, Dublin, Irel*and".* Mais cette solution requiert l'embarquement de réactifs dans des quantités parfaitement ajustées pour disposer d'un niveau de pression à la fois utile et qui ne risque pas d'endommager le composant. Un autre inconvénient est le recours à une manipulation pour perforer la membrane qui sépare initialement les composés chimiques. Les documents US 2012/275929 A1, US 2010/252124 A1 et US2012/273077 A1 divulguent des dispositifs selon le préambule de la revendication 1.

Il reste donc pertinent de disposer d'un composant fluidique intégrant un mécanisme de vanne fluidique, qui soit rapidement déployable sur le terrain, en utilisant des moyens d'actionnement déjà présents et facilement disponibles.

Le but de l'invention est de proposer un dispositif de type vanne fluidique comprenant un composant fluidique et disposant de moyens simples et fiables pour l'actionnement du mécanisme de vanne fluidique du composant.

### Exposé de l'invention

Ce but est atteint par un dispositif de type vanne fluidique comportant un composant fluidique selon la revendication 1, dans lequel est réalisé un circuit fluidique qui comporte un canal d'entrée et un canal de sortie, ledit composant fluidique comportant :
- Un mécanisme de vanne fluidique comportant :
   ∘ Un réservoir étanche, destiné à être rempli d'un volume de gaz capable de se dilater,
   ∘ Une membrane déformable fermant ledit réservoir de manière étanche, ladite membrane étant apte à se déformer par dilatation dudit volume gaz entre une première position dans laquelle elle forme un passage entre ledit canal d'entrée et ledit canal de sortie pour laisser passer un fluide, et une deuxième position dans laquelle elle obture ledit passage.

Selon une particularité, le composant comporte au moins un premier substrat dans lequel sont réalisés ledit canal d'entrée et ledit canal de sortie, et un deuxième substrat dans lequel est creusée une cavité formant ledit réservoir, en vis-à-vis du canal d'entrée et du canal de sortie, ladite membrane étant intercalée entre le premier substrat et ledit deuxième substrat pour recouvrir ladite cavité.

Selon une autre particularité, la membrane est réalisée dans un matériau de type élastomère.

Selon une autre particularité, le composant est réalisé sous la forme d'un élément monobloc intégrant ledit circuit fluidique et ledit mécanisme de vanne fluidique.

Le dispositif de type vanne fluidique comporte aussi:
- Un composant fluidique tel que défini ci-dessus,
- Un module de chauffage agencé pour chauffer ledit volume de gaz contenu dans ledit réservoir et commandé pour le chauffer à une température suffisante pour dilater ledit volume de gaz présent dans le réservoir, entraînant une déformation de la membrane de sa première position vers sa deuxième position.

Selon une réalisation particulière, ledit composant est réalisé sous la forme d'un élément monobloc apte à s'adapter sur un support incluant ledit module de chauffage.

Selon une autre réalisation particulière, ledit composant est réalisé sous la forme d'un élément monobloc, le module de chauffage étant intégré audit élément monobloc.

Selon l'invention, le circuit fluidique comporte une chambre de réaction, et ledit mécanisme de vanne fluidique est agencé sur le circuit fluidique débouchant dans ladite chambre de réaction, le module de chauffage étant agencé pour assurer à la fois un chauffage de :
- Ladite chambre de réaction pour réaliser une réaction de détection, et
- Du réservoir dudit mécanisme de vanne fluidique pour dilater le volume de gaz, entraînant un déplacement de la membrane vers sa position de fermeture en vue d'isoler la chambre lors de ladite réaction.

L'invention concerne également un procédé d'analyse mis en œuvre dans un dispositif tel que défini ci-dessus, le procédé consistant à activer le module de chauffage jusqu'à une température suffisante pour à la fois mettre en œuvre une réaction de détection dans ladite chambre de réaction et actionner la membrane vers sa position de fermeture pour isoler la chambre de réaction lors de ladite réaction de détection.

Il faut noter que le fractionnement du module de chauffage en au moins deux branches résistives permet avantageusement de fournir au moins deux puissances thermiques distinctes, aux différents composants du dispositif, et ainsi de mieux séquencer le procédé.

### Brève description des figures

D'autres caractéristiques et avantages vont apparaître dans la description détaillée qui suit faite en regard des dessins annexés dans lesquels :
- La figure 1 représente un dispositif connu de type vanne fluidique, qui ne fait pas partie de l'invention en vue de dessus.
- La figure 2 illustre le principe de fonctionnement d'un dispositif de type vanne fluidique connu, ne faisant pas partie de l'invention, respectivement avec son mécanisme de vanne fluidique en position ouverte et en position fermée.
- La figure 3 montre un composant fluidique utilisant le dispositif conforme à l'invention pour contrôler l'accès fluidique à une chambre de réaction du composant.
- La figure 4 montre un mode de réalisation avantageux du module de chauffage utilisé dans le dispositif de type vanne fluidique de l'invention.

### Description détaillée d'au moins un mode de réalisation

Dans la suite de la description, les termes "amont" et "aval" sont à comprendre en tenant compte du sens de circulation du fluide dans le circuit fluidique considéré.

Dans la suite de la description, dans un mécanisme de vanne fluidique, une vanne à l'état ouvert laisse passer le fluide (état 1 ou ON) et une vanne à l'état fermé bloque le passage du fluide (état 0 ou OFF).

L'invention vise notamment un mécanisme de vanne 33 fluidique intégré dans un composant 1 fluidique.

Il faut noter que le mécanisme de vanne 33 fluidique de l'invention dispose d'un fonctionnement réversible dans le sens qu'elle peut être actionnée de sa première position vers sa deuxième position et de sa deuxième position vers sa première position, à l'infini (dans ses limites mécaniques).

Le composant 1 fluidique peut notamment être employé pour une analyse nécessitant un chauffage.

Le composant 1 fluidique peut se présenter sous la forme d'un unique élément monobloc. Cet élément peut être réalisé par la superposition de plusieurs couches. Le composant 1 embarque avantageusement toute la partie fluidique du dispositif.

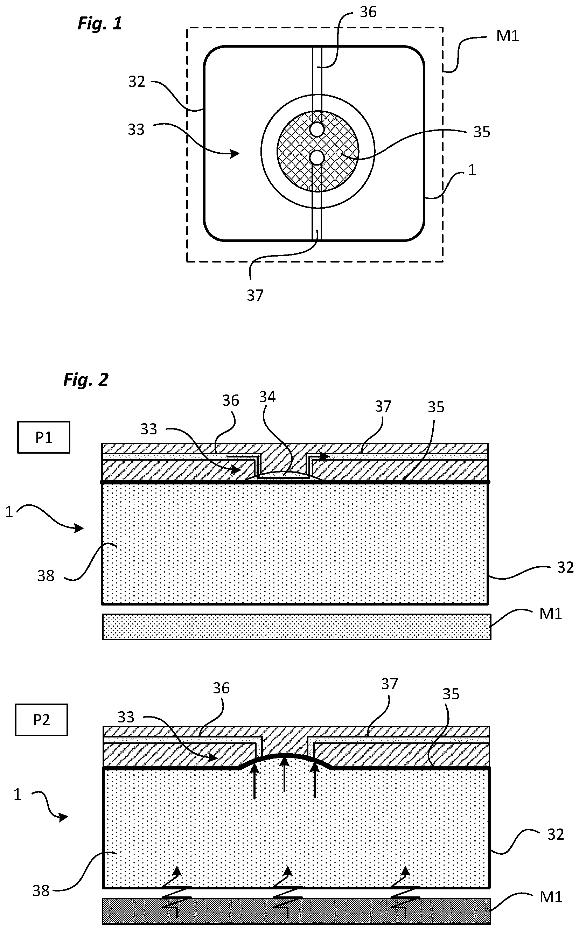

En référence à la figure 1, le mécanisme de vanne 33 fluidique est destiné à être agencé sur un circuit fluidique réalisé dans le composant 1 pour contrôler le passage d'un fluide F dans ce circuit fluidique. De manière simplifiée, le mécanisme de vanne 33 fluidique est agencé entre un canal d'entrée 36 et un canal de sortie 37 du circuit fluidique.

Le mécanisme de vanne 33 fluidique comporte au moins un réservoir étanche 32 destiné à contenir un volume de gaz, avantageusement un volume d'air 38.

Le mécanisme de vanne 33 fluidique comporte un espace 34 dans lequel débouche le canal d'entrée 36 et duquel ressort le canal de sortie 37, le volume de l'espace 34 étant variable selon la position d'une membrane 35 déformable du mécanisme.

La membrane 35 est apte à se déformer entre une première position d'ouverture dans laquelle l'espace 34 forme un passage pour le fluide F entre le canal d'entrée 36 et le canal de sortie 37 du circuit fluidique contrôlé (figure 2 - P1) et une position de fermeture dans laquelle elle bloque le passage du fluide F dans le circuit fluidique contrôlé (figure 2 - P2). Dans sa position de fermeture P2, le volume de l'espace 34 est ainsi nul ou quasi-nul, la membrane 35 étant plaquée contre une surface d'un substrat supérieur, sur laquelle débouche les deux canaux. Selon sa position, la membrane 35 permet donc de moduler le volume de l'espace 34 du mécanisme de vanne 33 fluidique.

Pour déplacer la membrane 35 du mécanisme entre sa première position et sa deuxième position, le dispositif comporte un module M1 de chauffage. Le module M1 de chauffage est agencé et configuré pour chauffer le volume d'air 38 placé dans le réservoir 32 afin de venir dilater ce volume d'air. En se dilatant dans le réservoir 32, l'air pousse la membrane 35, la déformant vers sa deuxième position de fermeture (P2). La membrane 35 vient alors obturer l'entrée des deux canaux 36, 37 pour fermer le circuit fluidique en appliquant une pression.

Il faut noter que le réservoir 32 est fermé de manière étanche dans le composant.

Le module M1 de chauffage intègre avantageusement une source d'alimentation électrique et utilise un module M2 de contrôle.

Il faut également noter que le module M1 de chauffage peut être intégré dans un support sur lequel vient s'adapter ledit composant 1 fluidique, de sorte que le composant 1 se présente sous la forme d'un consommable amovible par rapport au support, facilement remplaçable. Le support est alors un ensemble mécaniquement distinct du composant 1.

En variante, le module M1 de chauffage peut au moins en partie être intégré audit élément formant le composant 1. Dans ce dernier cas, à titre d'exemple, une résistance peut être intégrée au corps du composant 1, ledit composant 1 venant s'adapter sur un support pour connecter ladite résistance à une source d'alimentation électrique externe.

Le module M2 de contrôle est configuré pour contrôler le module M1 de chauffage en vue d'ajuster et de réguler la température appliquée.

Selon un aspect particulier de l'invention, il est possible de réaliser une balise entièrement autonome, le module de chauffage M1 pouvant être externe, ou intégré au composant ou assemblé sur celui-ci. Il en est de même pour le module M2 de contrôle.

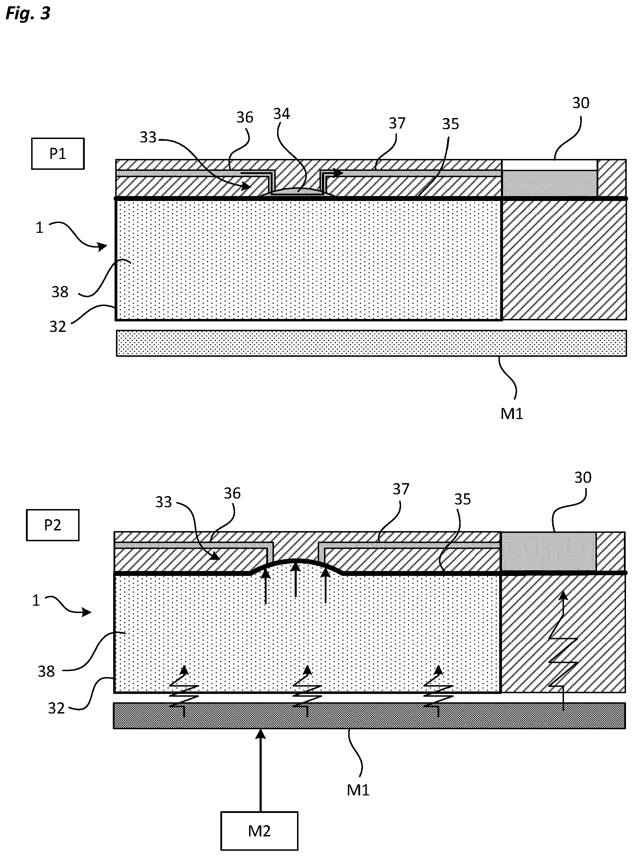

En référence à la figure 3, le composant 1 peut notamment être employé pour mettre en œuvre une réaction de détection, nécessitant un chauffage d'une chambre 30 de réaction.

Le circuit fluidique peut notamment déboucher, via le canal de sortie 37, dans ladite chambre 30 de réaction afin de pouvoir l'alimenter en fluide F.

Dans certaines conditions, il est nécessaire d'isoler la chambre 30 de réaction, notamment lorsque celle-ci est chauffée pour éviter l'évaporation du liquide présent dans la chambre microfluidique.

De manière avantageuse, on utilise ainsi l'activation du module M1 de chauffage, nécessaire à la mise en œuvre de la réaction chimique ou biochimique de détection dans la chambre 30 de réaction pour également actionner la membrane 35 du mécanisme de vanne 33 fluidique vers sa position de fermeture et ainsi isoler la chambre 30 en fermant le circuit fluidique. Autrement dit, par une seule commande du module M1 de chauffage, on obtient à la fois une isolation à chaud de la chambre 30 de réaction à l'aide du mécanisme de vanne 33 fluidique, et la mise en œuvre de la réaction chimique ou biochimique de détection dans la chambre 30.

De manière plus concrète, le principe de fonctionnement du dispositif est le suivant :
- A basse température, la chambre 30 et le circuit fluidique sont à des pressions similaires. La membrane 35 est dans sa position d'ouverture (P1), et le fluide peut ainsi passer librement.
- Lorsqu'on active le module de chauffage M1, l'air contenu à l'intérieur du réservoir 32 se dilate. Si la déformation de la membrane 35 conduit à une très petite variation du volume de fluide 38, en première approximation, l'augmentation de pression est directement proportionnelle à la hausse de température (en K). Ainsi en passant de 25°C à 65°C (298K à 338K) la pression augmente de 13% (autour de 100 mbar) ce qui déforme la membrane 35 du mécanisme de vanne 33 fluidique.
- La membrane 35 déformée bloque alors les deux canaux du circuit fluidique, isolant la chambre 30 de réaction par rapport à l'extérieur (P2).

Le taux de déformation de la membrane 35 dépend de la matière employée et de ses caractéristiques géométriques telles que son épaisseur et sa superficie.

Un avantage très intéressant de ce dispositif est de compenser une éventuelle dilation des bulles d'air pouvant se trouver dans la chambre 30 de réaction. En effet, en première approximation, une bulle dans la chambre 30 de réaction verra la même hausse de pression que la membrane 35, car elle verra également la même hausse de température. Avec un tel dispositif, la taille de la bulle dans la chambre ne pourra donc pas varier significativement lors de la chauffe, n'interférant pas avec les éventuels moyens de détection mis en place pour suivre l'évolution de la réaction.

Ce dispositif, en fermant le circuit fluidique menant à la chambre 30 de réaction, permet aussi de limiter grandement l'évaporation. Ainsi des analyses de trente minutes peuvent être menées sans perte notable de liquide.

Lorsque la température redescend, les pressions entre le réservoir 32 et les circuits fluidiques s'équilibrent et la membrane 35 retrouve sa position d'ouverture d'origine (P1).

De manière non limitative, la membrane 35 est apte à se déformer de manière élastique entre ses deux positions. A titre d'exemple, elle peut subir une déformation de plus de 100% par rapport à sa forme initiale.

A titre d'exemple, la membrane peut notamment être réalisée dans des matériaux tels que les élastomères de la famille des silicones tels que les MQ (Methyl-Polysiloxanes), les VMQ (Vinyl-Methyl-Polysiloxanes), les PVMQ (Phenyl-Vynil-Methyl-Polysiloxanes) ou les élastomères de type thermoplastiques (TPE), par exemple les TPE-S, TPS, TPE-E, TPC.

La chambre 30 de réaction est avantageusement réalisée dans le composant 1. Cette chambre 30 de réaction peut embarquer au moins une partie des réactifs nécessaires à la mise en œuvre de la réaction. Ces réactifs peuvent, par exemple, avoir été séchés dans la chambre ou lyophilisés.

De manière non limitative, la réaction de détection réalisée dans la chambre peut être de type amplification biomoléculaire (PCR, LAMP...) ou être de type immuno-enzymatique (type ELISA).

A titre d'exemple, pour une amplification biomoléculaire par LAMP qui est réalisée à 65°C +/- 1°C, la membrane élastomère peut être réalisée avec de l'Ecoflex avec les caractéristiques géométriques suivantes pour isoler la chambre de réaction 30 : une épaisseur inférieure à 0,2mm et un diamètre compris entre 2 et 3mm.

Il faut noter qu'une analyse par amplification biomoléculaire de microorganismes suppose en général une extraction du matériel génomique des microorganismes. Différentes solutions techniques peuvent bien entendu être mises en œuvre pour cela. Une solution intéressante et avantageuse consiste à réaliser une lyse thermique des microorganismes dans la chambre 30. Si les réactifs nécessaires à l'amplification biomoléculaire sont présents dans la chambre 30 alors il est possible avec le même module de chauffage M1 de fermer la vanne 33 qui isole ainsi la chambre 30 du milieu extérieur et prévient l'évaporation du liquide, de réaliser la lyse thermique des microorganismes et d'obtenir l'amplification biomoléculaire de l'ADN ou de l'ARN extrait.

Le composant peut intégrer plusieurs circuits fluidiques, menant à la même chambre 30 de réaction. Il peut par exemple comporter en plus un circuit fluidique comportant un évent, parfois nécessaire pour assurer un remplissage fluidique de la chambre 30 de réaction. Pour isoler la chambre lors de la réaction, ce deuxième circuit fluidique devra être également fermé. Pour cela, on peut utiliser un mécanisme de vanne 33 fluidique identique à celui décrit ci-dessus. De manière avantageuse, il est alors possible de n'employer qu'un seul réservoir 32, commun à plusieurs mécanismes. Le module M1 de chauffage peut également être commun à tous les mécanismes fonctionnant selon le principe de l'invention. Dans ce cadre, le module M1 de chauffage est ainsi destiné à chauffer :
- La chambre 30 de réaction ;
- Le volume d'air 38 utilisé pour l'actionnement de la vanne 33 ;

Tout en ne conservant qu'un seul module M1 de chauffage, il peut être utile de permettre la fermeture de la vanne 33 avant d'atteindre la température nécessaire à la réaction dans la chambre 30, ceci afin d'éviter toute pollution du milieu (par renversement accidentel du composant) et d'éviter un début d'évaporation de la solution présente dans la chambre 30 de réaction lors de la montée en température.

On peut, avec une seule source de chauffage, optimiser le fonctionnement en changeant la répartition de la dissipation de l'énergie.

Il s'agit ainsi de fractionner le module de chauffage en deux branches résistives arrangées en parallèle ou en série.

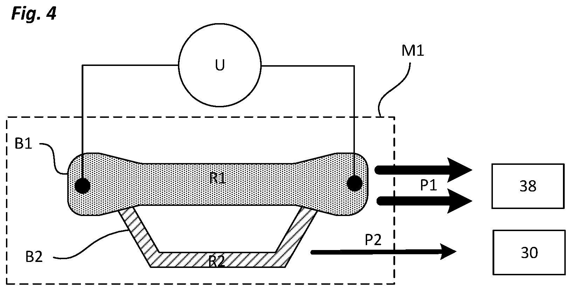

La figure 4 illustre ce principe de fractionnement du module M1 de chauffage en deux branches résistives mises en parallèle.

Les deux branches B1, B2 forment deux résistances distinctes en parallèle d'une source d'alimentation U. Si le matériau et l'épaisseur de chaque branche sont les mêmes, ce qui est plus simple pour la fabrication, leur largeur varie, permettant d'obtenir deux résistances distinctes (plus la piste est large, plus la résistance est faible). Le courant dans la première branche s'écrit comme I₁=IxR₂/(R₁+R₂) avec :
- I le courant injecté dans le montage ;
- I₁ le courant qui traverse la première branche ;
- R₁ la résistance de la première branche ;
- R₂ la résistance de la deuxième branche ;

La puissance dissipée (effet Joule) dans la première branche B1 s'écrit P₁=UxI₁=UxR₂/(R₁+R₂) avec la U la tension fournie par le module M2 de contrôle. Si la résistance R₁ est différente de la résistance R₂ cette puissance est différente pour les deux branches et donc la puissance de chauffage est différente pour les deux branches du moyen de chauffage M1.

En jouant sur les valeurs de résistances, il est donc possible d'obtenir plus de puissance thermique dans une branche que dans l'autre. A matériaux et épaisseurs de matériau constants, il est possible d'augmenter la puissance dissipée dans la branche la plus large, comme montré sur la figure 4. Sur la figure 4, on peut voir que la puissance thermique P1 émise par la première branche B1 est plus élevée que celle (P2) émise par la deuxième branche B2 du module. On atteint ainsi plus rapidement la température d'activation de la vanne 33 pour sceller la chambre 30 que celle nécessaire à la réaction dans la chambre 30 de réaction.

Le même principe peut être appliqué à deux branches résistives en série.

Ce principe peut bien entendu être adapté à plusieurs branches en série ou parallèle ou même en série/parallèle, en jouant à chaque fois sur la largeur de chaque piste.

Il est particulièrement avantageux de réaliser le module M1 de chauffage sur un film mince par dépôt (pulvérisation, sérigraphie, pochoir). Il est ainsi possible d'aligner précisément les différentes branches avec les éléments du composant à chauffer et de choisir la puissance thermique dissipée au niveau de chacune des branches.

Le dispositif peut également comporter un module M2 de contrôle configuré pour contrôler le module M1 de chauffage en vue d'ajuster et de réguler la température appliquée, ce module M2 de contrôle pouvant être intégré au module de chauffage.

Le module M1 de chauffage fait avantageusement partie d'un instrument/support sur lequel le composant 1 peut venir s'adapter.

De même, le module M1 de contrôle fait avantageusement partie de l'instrument évoqué ci-dessus.

Dans le but de réaliser une balise entièrement autonome, le module de chauffage M1 peut cependant, au moins en partie, être intégré au composant ou assemblé sur celui-ci. Il en est de même pour le module M2 de contrôle. Dans ce cas, le dispositif devra comporter une source d'alimentation électrique telle qu'une batterie embarquée.

La solution de l'invention se démarque des solutions antérieures par le fait qu'elle est fondée uniquement sur des matériaux polymères, qu'elle évite le recours à des produits chimiques pour la production d'un gaz à l'intérieur du composant fluidique, qu'elle évite les connexions pneumatiques entre le composant fluidique et un instrument et n'utilise pas de solutions pneumatiques externes pour fonctionner. Le module de chauffage peut également être totalement intégré au composant, permettant ainsi d'obtenir un dispositif totalement autonome et facilement transportable.

## Revendications

1. Dispositif de type vanne fluidique, comportant :
- Un composant fluidique dans lequel est réalisé un circuit fluidique qui comporte un canal d'entrée (36) et un canal de sortie (37), ledit composant fluidique comportant :
∘ Un mécanisme de vanne (33) fluidique comportant :
▪ Un réservoir étanche (32), destiné à être rempli d'un volume de gaz (38) capable de se dilater,
▪ Une membrane (35) déformable fermant ledit réservoir (32) de manière étanche, ladite membrane (35) étant apte à se déformer par dilatation dudit volume gaz (38) entre une première position dans laquelle elle forme un passage entre ledit canal d'entrée et ledit canal de sortie pour laisser passer un fluide (F), et une deuxième position dans laquelle elle obture ledit passage;
- Un module (M1) de chauffage agencé pour chauffer ledit volume de gaz contenu dans ledit réservoir (32) et commandé pour le chauffer à une température suffisante pour dilater ledit volume de gaz (38) présent dans le réservoir, entraînant une déformation de la membrane (35) de sa première position vers sa deuxième position, **caractérisé en ce que**:
- Le circuit fluidique comporte une chambre (30) de réaction, ledit mécanisme de vanne fluidique étant agencé sur le circuit fluidique débouchant dans ladite chambre de réaction, et **en ce que** le module (M1) de chauffage est agencé pour assurer à la fois un chauffage de :
∘ Ladite chambre (30) de réaction pour réaliser une réaction de détection, et
∘ Du réservoir (32) dudit mécanisme de vanne fluidique pour dilater le volume de gaz, entraînant un déplacement de la membrane (35) vers sa position de fermeture en vue d'isoler la chambre lors de ladite réaction.

2. Dispositif selon la revendication 1, **caractérisé en ce que** ledit composant est réalisé sous la forme d'un élément monobloc apte à s'adapter sur un support incluant ledit module (M1) de chauffage.

3. Dispositif selon la revendication 1, **caractérisé en ce que** ledit composant est réalisé sous la forme d'un élément monobloc et **en ce que** le module (M1) de chauffage est intégré audit élément monobloc.

4. Dispositif selon l'une des revendications 1 à 3, **caractérisé en ce que** le composant fluidique comporte au moins un premier substrat dans lequel sont réalisés ledit canal d'entrée et ledit canal de sortie, et un deuxième substrat dans lequel est creusée une cavité formant ledit réservoir (32), en vis-à-vis du canal d'entrée et du canal de sortie, ladite membrane (35) étant intercalée entre le premier substrat et ledit deuxième substrat pour recouvrir ladite cavité.

5. Dispositif selon l'une des revendications 1 à 4, **caractérisé en ce que** la membrane (35) est réalisée dans un matériau de type élastomère.

6. Dispositif selon l'une des revendications 1 à 5, **caractérisé en ce que** le composant fluidique est réalisé sous la forme d'un élément monobloc intégrant ledit circuit fluidique et ledit mécanisme de vanne (33) fluidique.

7. Procédé d'analyse mis en œuvre dans un dispositif tel que défini dans la revendication 1, **caractérisé en ce qu'**il consiste à activer le module (M1) de chauffage jusqu'à une température suffisante pour à la fois mettre en œuvre une réaction de détection dans ladite chambre (30) de réaction et actionner la membrane vers sa position de fermeture pour isoler la chambre (30) de réaction lors de ladite réaction de détection.

## Patentansprüche

1. Fluidventilvorrichtung, umfassend:
- Ein Fluidbauteil, in dem ein Fluidkreis ausgeführt ist, der einen Einlasskanal (36) und einen Auslasskanal (37) umfasst, das Fluidbauteil umfassend:
∘ Einen Fluidventilmechanismus (33), umfassend:
■ Einen dichten Behälter (32), der dazu bestimmt ist, mit einem Gasvolumen (38) gefüllt zu werden, das in der Lage ist, sich auszudehnen,
■ Eine verformbare Membran (35), die den Behälter (32) dicht verschließt, wobei die Membran (35) geeignet ist, sich durch Ausdehnung des Gasvolumens (38) zwischen einer ersten Stellung, in der sie einen Durchlass zwischen dem Einlasskanal und dem Auslasskanal bildet, um ein Fluid (F) durchzulassen, und einer zweiten Stellung, in der sie den Durchlass verschließt, zu verformen;
- Ein Heizmodul (M1), das dazu eingerichtet ist, das in dem Behälter (32) enthaltene Gasvolumen zu erwärmen, und gesteuert wird, um es auf eine Temperatur zu erwärmen, die ausreicht, um das in dem Behälter vorhandene Gasvolumen (38) auszudehnen, was eine Verformung der Membran (35) aus ihrer ersten Stellung zu ihrer zweiten Stellung hin bewirkt, **dadurch gekennzeichnet, dass**:
- Der Fluidkreis eine Reaktionskammer (30) umfasst, wobei der Fluidventilmechanismus an dem in die Reaktionskammer mündenden Fluidkreis eingerichtet ist, und dadurch, dass das Heizmodul (M1) dazu eingerichtet ist, eine Erwärmung zu gewährleisten:
∘ Sowohl der Reaktionskammer (30), um eine Detektionsreaktion auszuführen, und
∘ Als auch des Behälters (32) des Fluidventilmechanismus, um das Gasvolumen auszudehnen, was zu einer Verlagerung der Membran (35) zu der Verschlussstellung hin bewirkt, um die Kammer bei der Reaktion abzusperren.

2. Vorrichtung nach Anspruch 1, **dadurch gekennzeichnet, dass** das Bauteil in Form eines einstückigen Elements ausgeführt ist, das geeignet ist, sich an einen Träger anzupassen, der das Heizmodul (M1) beinhaltet.

3. Vorrichtung nach Anspruch 1, **dadurch gekennzeichnet, dass** das Bauteil in Form eines einstückigen Elements ausgeführt ist und dass das Heizmodul (M1) in das einstückige Element integriert ist.

4. Vorrichtung nach einem der Ansprüche 1 bis 3, **dadurch gekennzeichnet, dass** das Fluidbauteil mindestens ein erstes Substrat umfasst, in dem der Einlasskanal und der Auslasskanal ausgeführt sind, und ein zweites Substrat, in dem eine den Behälter (32) bildende Kavität gegenüber dem Einlasskanal und dem Auslasskanal ausgearbeitet ist, wobei die Membran (35) zwischen dem ersten Substrat und dem zweiten Substrat angeordnet ist, um die Kavität zu bedecken.

5. Vorrichtung nach einem der Ansprüche 1 bis 4, **dadurch gekennzeichnet, dass** die Membran (35) aus einem elastomeren Material ausgeführt ist.

6. Vorrichtung nach einem der Ansprüche 1 bis 5, **dadurch gekennzeichnet, dass** das Fluidbauteil in Form eines einstückigen Elements ausgeführt ist, das den Fluidkreis und den Fluidventilmechanismus (33) beinhaltet.

7. Analyseverfahren, das in einer Vorrichtung wie in Anspruch 1 definiert durchgeführt wird, **dadurch gekennzeichnet, dass** es darin besteht, das Heizmodul (M1) bis auf eine Temperatur zu aktivieren, die ausreicht, um sowohl eine Detektionsreaktion in der Reaktionskammer (30) durchzuführen als auch die Membran zu ihrer Verschlussstellung hin zu betätigen, um die Reaktionskammer (30) bei der Detektionsreaktion abzusperren.

## Claims

1. Device of fluidic valve type, comprising:
- a fluidic component in which there is formed a fluidic circuit which comprises an inlet channel (36) and an outlet channel (37), said fluidic component comprising:
∘ a fluidic valve mechanism (33), comprising:
■ a fluidtight reservoir (32) intended to be filled with a volume of gas (38) capable of expanding,
■ a deformable membrane (35) closing said reservoir (32) in a fluidtight manner, said membrane (35) being able to deform by expansion of said volume of gas (38), between a first position in which it forms a passage between said inlet channel and said outlet channel so as to allow a fluid (F) to pass, and a second position in which it obstructs said passage;
- a heating module (M1) designed to heat said volume of gas contained in said reservoir (32) and commanded to heat it to a temperature sufficient to expand said volume of gas (38) present in the reservoir, causing the membrane (35) to deform from its first position toward its second position, **characterized in that**:
- the fluidic circuit comprises a reaction chamber (30), said fluidic valve mechanism being arranged on the fluidic circuit opening into said reaction chamber, and **in that** the heating module (M1) is designed to heat both:
∘ said reaction chamber (30) in order to perform a detection reaction, and
∘ the reservoir (32) of said fluidic valve mechanism so as to expand the volume of gas, causing the membrane (35) to move toward its closure position with a view to isolating the chamber during said reaction.

2. Device according to Claim 1, **characterized in that** said component is produced in the form of a one-piece element able to be fitted onto a support including said heating module (M1).

3. Device according to Claim 1, **characterized in that** said component is produced in the form of a one-piece element and **in that** the heating module (M1) is incorporated into said one-piece element.

4. Device according to one of Claims 1 to 3, **characterized in that** the fluidic component comprises at least a first substrate in which said inlet channel and said outlet channel are produced, and a second substrate into which there is hollowed a cavity forming said reservoir (32), facing the inlet channel and the outlet channel, said membrane (35) being interposed between the first substrate and said second substrate in order to cover said cavity.

5. Device according to one of Claims 1 to 4, **characterized in that** the membrane (35) is produced from a material of elastomer type.

6. Device according to one of Claims 1 to 5, **characterized in that** the fluidic component is produced in the form of a one-piece element incorporating said fluidic circuit and said fluidic valve mechanism (33).

7. Analysis method implemented in a device as defined in Claim 1, **characterized in that** it consists in activating the heating module (M1) to a temperature sufficient to both implement a detection reaction in said reaction chamber (30) and actuate the membrane toward its closure position so as to isolate the reaction chamber (30) during said detection reaction.
